# Europäisches Patentamt
# European Patent Office
# Office européen des brevets

(19)

(11) Veröffentlichungsnummer: **0 004 943**
**B1**

(12)

# EUROPÄISCHE PATENTSCHRIFT

(45) Veröffentlichungstag der Patentschrift:
07.10.81

(51) Int. Cl.³: **B 01 D 13/04**, C 08 J 5/22,
C 08 L 1/12

(21) Anmeldenummer: 79101118.2

(22) Anmeldetag: 11.04.79

(54) **Asymmetrische Ultrafiltrationsmembrane auf der Basis von Zellulosetriacetat und Verfahren zu ihrer Herstellung.**

(30) Priorität: 13.04.78 DE 2816086

(43) Veröffentlichungstag der Anmeldung:
31.10.79 Patentblatt 79/22

(45) Bekanntmachung des Hinweises auf die Patenterteilung:
07.10.81 Patentblatt 81/40

(84) Benannte Vertragsstaaten:
BE CH FR GB IT LU NL SE

(56) Entgegenhaltungen:

DE-A-2 621 519
DE-B-1 100 941
FR-A-2 099 286
FR-A-2 195 469
FR-A-2 255 338
US-A-3 931 067

(73) Patentinhaber: Sartorius GmbH., Weender Landstrasse 94-108, D-3400 Göttingen (DE)

(72) Erfinder: Franken, Walter, Dr. Dipl.-Chem., Heinrich-Deppe-Ring 24, D-3406 Bovenden 1 (DE)
Erfinder: Nussbaumer Dietmar, Dr. Dipl. Chem., Am Kalten Born 39, D-3400 Göttingen (DE)
Erfinder: Perl, Horst, Dr. Dipl.-Chem., Planckstrasse 8, D-3400 Göttingen (DE)
Erfinder: Weickhardt, Ludwig, Hasenwinkel 8, D-3406 Bovenden 1 (DE)

(74) Vertreter: Deufel, Paul et al, Patentanwälte Müller-Boré.Deufel Schön.Hertel Siebertstrasse 4, D-8000 München 86 (DE)

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

ACTORUM AG.

## Asymmetrische Ultrafiltrationsmembrane auf der Basis von Zellulosetriacetat
## und Verfahren zu ihrer Herstellung

Bei Membranen auf der Grundlage von Zelluloseacetaten ist es allgemein bekannt (DE-AS-1 100 941), die Benetzbarkeit mit Hilfe des Zusatzes handelsüblicher Netzmittel zu verbessern.

Ausserdem ist es bekannt, die Trocknung von Ultrafiltrationsmembranen nach Imprägnierung mit Glyzerin durchzuführen, wobei die Imprägnierung eine irreversible Durchflussminderung und das Brüchigwerden oder Schrumpfen verhindern soll. Nach dieser Methode ist jedoch eine ausreichende Benetzbarkeit der getrockneten Zellulosetriacetatmembrane nicht zu erreichen, und die Durchflussleistung liegt unter dem ursprünglichen Wert vor der Trocknung. Soll die Membrane als Ultra- und Hämofiltrationsmembrane im medizinischen Bereich Anwendung finden, so scheidet die Verwendung von Netzmitteln von vornherein aus.

Der Erfindung liegt daher die Aufgabe zugrunde, eine Membrane der eingangs genannten Gattung zu schaffen, die einerseits eine gute Benetzbarkeit besitzt und andererseits nicht zum Brüchigwerden und Schrumpfen neigt und sich für den Einsatz im medizinischen Bereich eignet.

Diese Aufgabe wird erfindungsgemäss bei einer asymmetrischen trockenen Ultrafiltrationsmembrane auf der Basis von Zellulosetriacetat, gegebenenfalls in Mischung mit Diacetat, gelöst durch den Zusatz von hydrophobierter synthetischer Kieselsäure zur Giesslösung.

Überraschenderweise hat sich gezeigt, dass durch Zusatz von hydrophobierter synthetischer Kieselsäure (z.B. Ärosil R 972 oder SIPERNAT 17, Degussa) zur Giesslösung eine einwandfreie Benetzbarkeit der getrockneten Membrane und Erhaltenbleiben der Durchflussraten erreicht wird. Entgegen den Erwartungen, die man aufgrund der chemisch-physikalischen Eigenschaften der hydrophobierten Kieselsäure zuschreibt, wirkt sich also die Zugabe eines hydrophoben Füllstoffes in Richtung einer Erhöhung der Hydrophilie des Endproduktes aus.

Hydrophobierte synthetische Kieselsäuren sind bekannt. Es handelt sich dabei um entweder pyrogen oder durch Fällung hergestellte Produkte, die, analytisch betrachtet, ziemlich reines $SiO_2$ sind, wobei die an der Oberfläche der Kieselsäure bzw. des $SiO_2$ vorliegenden Hydroxylgruppen mit geeigneten Reaktionspartnern in Wechselwirkung gebracht werden und die Kieselsäure dadurch hydrophobiert wird. Von den pyrogenen Kieselsäuren ist am bekanntesten der Typ Ärosil der Firma Degussa. Diese Kieselsäuren werden durch Hydrolyse von Siliciumtetrachlorid in einer Knallgasflamme hergestellt und haben über 99,8% $SiO_2$-Gehalt. Sie sind aus amorphen, kugelförmigen Teilchen aufgebaut, die einen Durchmesser von einigen µm bis 40 µm besitzen. Bei einem Volumen von ca. 15 ml besitzt 1 g solcher Kieselsäure eine Oberfläche von 100 bis 400 m$^2$ und mehr. Im allgemeinen entspricht die der Bezeichnung nachgesetzte Ziffer in etwa dieser Oberfläche nach BET. Bei der hydrophobierten Kieselsäure ist durch den Hydrophobierungszusatz der $SiO_2$-Gehalt etwas geringer.

Diese Fällungskieselsäuren werden im allgemeinen durch Umsetzung von Alkalisilikatlösungen mit Säuren in Form weisser Niederschläge von amorphen Kieselsäuren erhalten, die nach dem Filtrieren und Waschen getrocknet und gegebenenfalls noch vermahlen werden. Das Trocknen erfolgt vor allem durch Sprühtrocknen. Die bekanntesten Produkte dieses Typs sind die Sipernate. SIPERNAT 17 ist ein hydrophobiertes Produkt, nämlich eine durch Sprühtrocknung wässriger Kieselsäuresuspensionen gewonnene Trägerkieselsäure, deren Sekundärteilchen zu etwa 80% im Bereich zwischen 40 und 90 Mikron liegen, wobei jedoch die Grösse und Beschaffenheit der Sekundärteilchen durch die Bedingungen der Sprühtrocknung bestimmt werden. Auch an der Oberfläche dieser hydrophilen Fällungskieselsäuren befinden sich freie Hydroxylgruppen, die durch Umsetzung mit Halogenalkylsilanen zu hydrophoben Kieselsäuren führen, bei denen die Hydroxylgruppen durch organische Reste ersetzt sind. Im Falle von SIPERNAT 17 handelt es sich um das Reaktionsprodukt einer Fällungskieselsäure mit Organochlorsilan. Die mittlere Teilchengrösse der Sekundärteilchen beträgt hierbei nur 3 µm, die BET-Oberfläche beträgt ca. 110 m$^2$/g und der pH-Wert einer 5%-igen wässrigen Dispersion in Wasser zu Azeton oder Methanol 1 : 1 beträgt ca. 6.

Bezüglich hydrophober durch Flammenhydrolyse gewonnener Kieselsäure sei hier verwiesen auf die Literaturstelle «Chemiker-Zeitung/Chemische Apparatur» 89 (1965), Seiten 437 bis 440, Heft 13 sowie das Prospekt der Degussa «Hydrophobes Ärosil», Herstellung, Eigenschaften und Verhalten. Bezüglich hydrophober, durch Fällung erhaltener Kieselsäure sei verweisen auf die Schriftenreihe Anwendungstechnik Pigmente Nr. 30 «SIPERNAT und ÄROSIL» für die Futtermittelindustrie» der Firma Degussa, Ausgabedatum 20. Juni 1969, wo das Präparat SIPERNAT 17 ausführlich erläutert ist. Die Herstellung dieses Typs von Kieselsäure ist in früheren Publikationen der Firma Degussa erläutert. Auf alle diese Publikationen der Firma Degussa sei ausdrücklich für die Offenbarung Bezug genommen.

Verwendet werden muss bei der Giesslösung ca. 1 bis 30 Gew.-%, insbesondere 3 bis 25 Gew.% hydrophobierte synthetische Kieselsäure, bezogen auf den Gesamtfeststoffgehalt, wobei für hohe D-Werte für Wasser und gute Eiweissrückhaltung ein Gehalt von 5 bis 10 Gew.-%, und für hohe D-Werte für Eiweiss ein Gehalt von 10 bis 25 Gew.-% besonders bevorzugt ist.

Die Verwendung hydrophiler Kieselsäuren, z.B. vom Typ Ärosil COK 84, 200, führt zwar zu einer Erhöhung der Benetzbarkeit, gleichzeitig aber auch zu starkem Schrumpfen beim Verseifen was auch bei Acetatmembranen bei erhöhter Temperatur und vom Neutralpunkt abweichenden pH-Werten häufig ungewollt eintritt und zu starker Leistungsminderung beim Trocknen, also praktisch zu all den Nachteilen, die ohne den erfindungsgemässen Kieselsäurezusatz auftreten. Auf das Trocknen von hydrophile Kieselsäure enthaltenden Membranen auf Zelluloseacetatbasis wurde daher bisher in der Regel verzichtet, wie sich z.B. aus den DE-OS 23 40 176 und 21 65 073 ergibt.

Erfindungsgemäss sind folgende Rahmenwerte wesentlich:

Die mechanische Festigkeit sinkt bei zu hohem Kieselsäuregehalt, z.B. wenn diese mehr als 30% des Gesamtfeststoffgehaltes in der Giesslösung ausmacht.

Die Erfindung ist auf die bekannten asymmetrischen Triacetatmembranen anwendbar, die gegebenenfalls auch Diacetat enthalten können.

Das Verhältnis von Azeton zu Dioxan in der Giesslösung beträgt insbesondere 2 : 1 bis 1 : 2, vorzugsweise 0,8 bis 1,2 : 1.

Der Anteil an Formamid, bezogen auf den Feststoffgehalt, bestimmt die Abscheidegrenze. Je nach erwünschter Abscheidegrenze ist das Verhältnis Feststoffgehalt zu Formamid wie 1 : 0,8 bis 1 : 4.

Formamid kann zum Teil oder vollständig ersetzt werden durch andere niedere aliphatische Amide, vorzugsweise Acetamid.

Eine bevorzugte Ausführungsform der Zusammensetzung der Giesslösung und des Giessens von asymmetrischen Triacetatmembranen ist in der DE-OS 26 21 519.0-41 gezeigt.

Als Zellulosetriacetat wird vorzugsweise ein verhältnismässig niedrigmolekulares Triacetat verwendet, insbesondere solche Sorten, deren Viskosität in 2%-iger Lösung in Methylenchlorid/Methanol 9/1, gemessen nach Höppler bei 25 °C, maximal 0,01 Pa·s beträgt. Viskositäten um 0,0075 bis 0,01 Pa·s sind sehr geeignet. Der Acetylgehalt beträgt vorzugsweise mindestens ca. 43%, insbesondere 43,5% oder mehr. Reines Triacetat hätte einen Acetylgehalt von 44,8%, der jedoch in der Praxis kaum erreicht wird. Die Sorten T 900 und T 700 der Firma Bayer sind z.B. sehr gut geeignet. Das Triacetat kann zur Erzielung einer bestimmten Abscheidegrenze teilweise mit Zellulosediacetat, beispielsweise mit bis zu 30% Diacetat, bezogen auf CTA, vermischt sein. Eine geeignete Diacetatsorte ist z.B. E 398-3 (Eastman).

Gemäss bevorzugter Ausführungsformen beträgt der Kieselsäurezusatz bei ganz oder überwiegend aus Triacetat bestehenden Membranen 3 bis 10% des Gesamtfeststoffgehaltes (also Acetat + Kieselsäure).

Pyrogene Kieselsäure, insbesondere der Typ R 972 der Firma Degussa, wird derzeit bevorzugt.

Die Ziehung der Membranen erfolgt nach dem Fällbadverfahren unter Verwendung von Eiswasser als Fällmittel, wie dies für Membranen dieser Art an sich bekannt ist, wobei insbesondere die Giesslösung für die Membrane aus 8 bis 20 Gew.-% Zellulosetriacetat, gegebenenfalls teilweise ersetzt durch Zellulosediacetat, 1 bis 30 Gew.-%, bezogen auf den Gesamtfeststoffgehalt, hydrophobierter Kieselsäure, Azeton und Dioxan in einem Verhältnis von 2:1 bis 1:2, vorzugsweise 0,8 bis 1,2:1, zueinander und aus Formamid besteht, wobei der Anteil an Formamid bezogen auf den Feststoffgehalt 0,8:1 bis 4:1 beträgt und zum Teil oder vollständig durch andere Amide, vorzugsweise Acetamid, ersetzbar ist.

Membrane mit diesem Aufbau und mit dieser Stoffzusammensetzung zeigen eine geringe Schrumpftendenz, praktisch keine Durchflussminderung beim Trocknen und sind einwandfrei zu verarbeiten. Sie können auch ohne Schwierigkeiten in herkömmlicher Weise mit Glyzerin imprägniert und getrocknet werden.

Für die an sich paradoxe Erscheinung, dass die Wechselwirkung der weitgehend hydrophoben Membranmatrix (Zellulosetriacetat) mit einem hydrophoben Füllstoff zu einer Erhöhung der Hydrophilie der Membrane führt, gibt es zwei Erklärungsmöglichkeiten, die auf dem Rest-OH-Gehalt sowohl von Zellulosetriacetat als auch von hydrophobierte synthetischer Kieselsäure herrühren.

Die erste Erklärungsmöglichkeit geht davon aus, dass der Substitutionsgrad handelsüblicher Zellulosetriacetate i.a. unter 2,8 liegt, d.h. im Durchschnitt weist jede zehnte bis fünfzehnte Glukoseeinheit eine unveresterte Hydroxylgruppe auf. Im Polymerverband sind die freien Hydroxylgruppen jedoch durch Wasserstoffbrücken zu den im Überschuss vorhandenen Acetylgruppen koordinativ abgesättigt und einer Wechselwirkung mit Wasser daher nicht zugänglich. Die Zugabe eines feindispersen, hydrophoben Füllstoffes könnte nun einen wesentlichen Anteil der hydrophoben Gruppen des Polymeren bevorzugt binden und damit indirekt eine entsprechende Anzahl von Hydroxylgruppen freisetzen.

Die zweite Erklärungsmöglichkeit wird darin gesehen, dass die Hydrophobierung von Kieselsäure technisch durch teilweise Silylierung der in der Partikeloberfläche vorhandenen Hydroxylgruppen erfolgt, wobei ein bestimmter Resthydroxylgehalt zum Erhaltenbleiben des Thixotropierungseffektes erforderlich ist. Es ist daher auch denkbar, dass während des Fällprozesses die Kieselsäurepartikel in der Weise an der Grenzfläche Membran-matrix-Wasser fixiert werden, dass die hydrophoben Bereiche vom Polymeren umschlossen sind, die hydrophilen Bereiche dagegen frei an der Oberfläche liegen.

Es kann derzeit nicht entschieden werden, welchem der beiden Mechanismen erklärungsmässig der Vorzug zu geben ist. Es ist jedoch auch nicht auszuschliessen, dass eine Überlagerung beider Effekte vorliegt. Die erfindungsgemässe Einbeziehung von Kieselsäure ist auch für Zellulosehydratmembranen von Bedeutung, weil sie die starke Verschlechterung der Membraneigenschaften, insbesondere die Verminderung der Durchflussrate und der Eiweissdichtigkeit beim Verseifen verhindert. Dies ist wiederum für Acetatmembranen von Bedeutung, wenn die Verseifung ungewollt während des Betriebes, z.B. infolge extremer pH-Werte, eintritt, weil der erfindungsgemässe Zusatz von Kieselsäure hier dann die Verschlechterung der Eigenschaften der teilweise oder ganz verseiften Acetatmembranen verhindert.

Die folgenden Beispiele sollen die Erfindung erläutern. Alle Prozentangaben sind Gew.-%.

Beispiel 1
Giesslösung
11% Zellulosetriacetat (T 700, Bayer)
  3% hydrophobierte, pyrogene Kieselsäure
    (Ärosil R 972, Degussa)
39% Azeton
22% Dioxan
25% Formamid

Die Giesslösung wird auf eine in einem Fällbad von 0 °C rotierende Giesstrommel aufgerakelt. Die Verweilzeit an der Luft, vor dem Eintauchen in das Fällbad beträgt 20 Sek. Die ausgefällte Membrane wird mit einer wässrigen 30%-igen Glyzerinlösung imprägniert und in einem Warmluftstrom von 60 °C getrocknet.

Ein Vergleich der Membraneigenschaften vor und nach der Trocknung führt zu folgenden Ergebnissen:

| | | ungetrocknet | getrocknet |
|---|---|---|---|
| $D_{H_2O}$ | (l/m²h) | 292 | 282 |
| $D_{Ser}$ | (l/m²h) | 209 | 185 |
| $R_{Ser}$ | (%) | 99,3 | 99,4 |
| $D_{MY}$ | (l/m²h) | 160 | 158 |
| $R_{MY}$ | (%) | 95,8 | 96,2 |
| $D_{Cyt}$ | (l/m²h) | 250 | 226 |
| $R_{Cyt}$ | (%) | 55 | 68 |
| Benetzungszeit | | — | 12 Sek. |
| Prüfbedingungen: | | | |
| Filtrationsdruck: | | 1bar | |
| Filtrationsgerät: | | gerührte Ultrafiltrationszelle | |
| Konzentration der | | | |
| Testlösungen: | | 0,1% Testprotein in | |
| | | 0,9%-iger Kochsalzlösung | |

Bedeutung der Symbole:
D = Durchflussleistung (l/m² h).
   (Bei Eiweisslösungen ist die durchschnittliche Durchflussleistung bei Aufkonzentrierung der 0,1%-igen Lösungen auf 2% angegeben).
R = Eiweisszurückhaltung (%)
Indices:
Ser = Serumalbumin vom Rind, MG = 67.000
My = Myoglobin vom Wal, MG = 17.000
Cyt = Cytochrom C aus Pferdeherz, MG = 12.900

Beispiel 1a (Vergleichsbeispiel)
Giesslösung
14% Zellulosetriacetat (T 700, Bayer)
39% Azeton
22% Dioxan
25% Formamid

Die Membrane wird wie in Beispiel 1 beschrieben hergestellt und getrocknet.

| | | ungetrocknet | getrocknet |
|---|---|---|---|
| $D_{H_2O}$ | (l/m²h) | 234 | 138 |
| $D_{Ser}$ | (l/m²h) | 200 | 108 |
| $R_{Ser}$ | (%) | 99,6 | 99,5 |
| $D_{MY}$ | (l/m² h) | 130 | 95 |
| $R_{My}$ | (%) | 97,9 | 96,8 |
| $D_{Cyt}$ | (l/ m²h) | 217 | 120 |
| $R_{Cyt}$ | (%) | 67 | 70 |
| Benetzungszeit | | — | nach 15 Minuten noch nicht vollständig benetzt. |

Zum Unterschied von Beispiel 1, wo die Durchflussraten im Bereich der Messgenauigkeit nach dem Trocknen praktisch gleichbleiben, ist in Abwesenheit des Füllstoffs eine starke Verminderung der Durchflussraten (auf unter 60% des Ausgangswertes bei reinem Wasser) nach dem Trocknen zu erkennen und die Benetzungszeit liegt um ein Vielfaches höher.

Beispiel 2
Giesslösung
11,2% Zellulosetriacetat (T 700, Bayer)
 2,8% Zellulosediacetat (E 398-3 Eastman)
 1,0% hydrophobierte pyrogene Kieselsäure
    (Ärosil R 972, Degussa)
28,0% Azeton
28,0% Dioxan
29,0% Formamid

Die Membrane wird wie in Beispiel 1 beschrieben gezogen, mit Glyzerin imprägniert und getrocknet.

Die Membraneigenschaften nach der Trocknung sind wie folgt:

| | | getrocknet |
|---|---|---|
| $D_{H_2O}$ | (l/m²h) | 330 |
| $D_{Ser}$ | (l/m²h) | 167 |
| $R_{Ser}$ | (%) | 99,5 |
| $D_{My}$ | (l/ m²h) | 140 |
| $R_{My}$ | (%) | 96,5 |
| $D_{Cyt}$ | (l/ m²h) | 210 |
| $R_{Cyt}$ | (%) | 55 |
| Benetzungszeit: | | 20 Sek. |
| Prüfbedingungen: | } | |
| Filtrationsdruck: | | |
| Filtrationsgerät: | | wie in Beispiel 1 |
| Konzentration der | | |
| Testlösung: | | |

Patentansprüche:
1. Asymmetrische trockene Ultrafiltrationsmembrane auf der Basis von Zellulosetriacetat, gegebenenfalls gemischt mit -diacetat, mit einem Zusatz von feinteiliger Kieselsäure, dadurch gekennzeichnet, dass der Zusatz aus hydrophobierter synthetischer Kieselsäure besteht.
2. Membrane nach Anspruch 1, dadurch gekennzeichnet, dass die synthetische Kieselsäure pyrogene hydrophobierte Kieselsäure ist.

3. Membrane nach Anspruch 1, dadurch gekennzeichnet, dass die synthetische Kieselsäure gefällte getrocknete hydrophobierte Kieselsäure ist.

4. Membrane nach Anspruch 1, dadurch gekennzeichnet, dass der Zusatz an hydrophobierter synthetischer Kieselsäure 1 bis 30 Gew.-% des Gesamtfeststoffgehaltes bildet.

5. Membrane nach Anspruch 4, dadurch gekennzeichnet, dass der Zusatz an hydrophobierter synthetischer Kieselsäure 3 bis 25 Gew.-% des Gesamtfeststoffgehaltes bildet.

6. Membrane nach einem der Ansprüche 1 bis 5, dadurch gekennzeichnet, dass Zellulosetriacetat bis zu 30%, vorzugsweise bis zu 25%, durch Zellulosediacetat ersetzt ist.

7. Verfahren zur Herstellung einer Membran nach einem der vorhergehenden Ansprüche, dadurch gekennzeichnet, dass die Ziehung der Membranen nach dem Fällbadverfahren unter Verwendung von Eiswasser als Fällmittel in an sich bekannter Weise erfolgt, wobei die Giesslösung für die Membrane aus 8 bis 20 Gew.-% Zellulosetriacetat, gegebenenfalls teilweise ersetzt durch Zellulosediacetat, 1 bis 30 Gew.-%, bezogen auf dem Gesamtfeststoffgehalt, hydrophobierter Kieselsäure, Aceton und Dioxan in einem Verhältnis von 2:1 bis 1:2, vorzugsweise 0,8 bis 1,2:1 zueinander und aus Formamid besteht, wobei der Anteil an Formamid bezogen auf den Feststoffgehalt 0,8:1 bis 4:1 beträgt und zum Teil oder vollständig durch andere Amide, vorzugsweise Acetamid ersetzbar ist.

8. Verfahren nach Anspruch 7, dadurch gekennzeichnet, dass Zellulosetriacetat bis zu 20 Gew.-% durch Zellulosediacetat ersetzt ist und man vor dem Fällen in Eiswasser die gegossene Membran 2 bis 90 Sek. der Verdampfung aussetzt und die Membran, gegebenenfalls nach Imprägnieren mit Glycerin, trocknet.

**Revendications:**

1. Membrane asymétrique et sèche à base de triacétate, éventuellement mélangé à du diacétate, de cellulose, comprenant une addition d'acide silicique en fines particules, caractérisée en ce que l'addition est constituée d'acide silicique synthétique rendu hydrophobe.

2. Membrane suivant la revendication 1, caractérisée en ce que l'acide silicique synthétique est de l'acide silicique pyrogène rendu hydrophobe.

3. Membrane suivant la revendication 1, caractérisée en ce que l'acide silicique synthétique est de l'acide silicique précipité séché et rendu hydrophobe.

4. Membrane suivant la revendication 1, caractérisée en ce que l'addition d'acide silicique synthétique rendu hydrophobe constitue 1 à 30 % en poids du contenu total en matière solide.

5. Membrane suivant la revendication 4, caractérisée en ce que l'addition d'acide silicique synthétique rendu hydrophobe constitue 3 à 25 % en poids du contenu total en matière solide.

6. Membrane suivant l'une quelconque des revendications 1 à 5, caractérisée en ce que le triacétate de cellulose est remplacé par du diacétate de cellulose dans une proportion allant jusqu'à 30%, de préférence 25%.

7. Procédé de fabrication d'une membrane suivant l'une quelconque des revendications précédentes, caractérisé en ce que l'étirage de la membrane est effectué de manière connue en soi selon le procédé de précipitation dans un bain en utilisant de l'eau glacée en tant que précipitant, la solution de coulée pour la membrane étant constituée de 8 à 20 % en poids de triacétate de cellulose, éventuellement partiellement remplacé par du diacétate de cellulose, de 1 à 30% en poids, par rapport au contenu total en matière solide, d'acide silicique rendu hydrophobe, d'acétone et de dioxane en une proportion de 2:1 à 1:2, de préférence 0,8 à 1,2:1, et de formamide, le contenu en formamide par rapport au contenue en matière solide étant de 0,8:1 à 4:1 et pouvant être partiellement ou entièrement remplacé par d'autres amides, de préférence de l'acétamide.

8. Procédé suivant la revendication 7, caractérisé en ce que le triacétate de cellulose est remplacé par du diacétate de cellulose dans une proportion allant jusqu'à 20% en poids, et qu'avant la précipitation dans de l'eau glacée, la membrane coulée est exposée pendant 2 à 90 secondes à l'évaporation, et que la membrane est séchée, éventuellement après être imprégnée de glycérine.

**Claims:**

1. An asymmetrical dry ultrafiltration membrane on the basis of cellulose triacetate, optionally mixed with cellulose diacetate, with an addition of finely divided silica, characterized in that the addition consists of synthetic silica made hydrophobic.

2. A membrane according to claim 1, characterized in that the synthetic silica is pyrogenic silica made hydrophobic.

3. A membrane according to claim 1, characterized in that the synthetic silica is precipitated, dried silica which has been made hydrophobic.

4. A membrane according to claim 1, characterized in that the addition of synthetic silica made hydrophobic makes up from 1 to 30 % by weight of the total solids content.

5. A membrane according to claim 4, characterized in that the addition of synthetic silica made hydrophobic amounts to from 3 to 25% by weight of the total solids content.

6. A membrane according to one of claims 1 to 5, characterized in that cellulose triacetate is replaced by up to 30%, preferably up to 25% of cellulose diacetate.

7. A process of producing a membrane according to one of the preceding claims, characterized in that drawing of the membranes takes place according to the precipitation bath method under

utilization of ice-water as precipitation agent in per se known manner, with the pouring solution for the membrane consisting of 8 to 20% by weight of cellulose triacetate, optionally partially replaced by cellulose diacetate, 1 to 30% by weight, based on the total solids content, of silica made hydrophobic, acetone and dioxane at a ratio of 2:1 to 1:2, preferably of 0,8 to 1,2:1, relative to one another and formamide, with the proportion of formamide amounting to from 0,8:1 to 4:1 based on the solids content and being in part or entirely replaceable by other amides, preferably acetamide.

8. A process according to claim 7, characterized in that cellulose triacetate is replaced until up to 20% by weight by cellulose diacetate, and in that the poured membrane is, before precipitation in ice-water, exposed to evaporation for 2 to 90 seconds and in that the membrane is dried, optionally after impregnation with glycerine.